# FASCICULE DE BREVET EUROPEEN

(11) **EP 3 548 383 B1**
(45) Date de publication et mention de la délivrance du brevet: **31.08.2022**
(21) Numéro de dépôt: 17816525.4
(22) Date de dépôt: 27.11.2017
(51) Int. Cl.: B64F 1/14, B64C 39/04

(54) **SYSTEME ET PROCEDE D'ARRIMAGE D'UN AEROSTAT, ET AEROSTAT ET STRUCTURES RECEPTRICES AINSI EQUIPES**
SYSTEM UND VERFAHREN ZUM ANKOPPELN EINES AEROSTATS SOWIE AEROSTAT UND EMPFANGSSTRUKTUREN FÜR DIESEN ZWECK
SYSTEM AND METHOD FOR DOCKING AN AEROSTAT, AND AEROSTAT AND RECEIVING STRUCTURES EQUIPPED FOR SUCH A PURPOSE

(30) Priorité: 01.12.2016 FR 1661810
(43) Date de publication de la demande: 09.10.2019
(73) Titulaire: Flying Whales, 92150 Suresnes (FR)
(72) Inventeur: BOUGON, Sébastien, 75008 Paris (FR)
(74) Mandataire: IPAZ
(86) Numéro de dépôt international: PCT/EP2017/080555
(87) Numéro de publication internationale: WO 2018/099870

(56) Documents cités:
- EP-A2- 2 154 070
- DE-C- 548 638
- DE-C1- 10 121 854
- US-A- 2 150 428
- US-A1- 2010 102 164
- US-A1- 2016 309 346

## Description

### Domaine technique

La présente invention concerne un système pour arrimer un aérostat à une structure réceptrice mobile ou fixe. Elle vise aussi un procédé d'arrimage mis en œuvre dans ce système, ainsi qu'un aérostat équipé de ce système et une structure réceptrice adaptée.

Le domaine de l'invention est plus particulièrement, mais de manière non limitative, celui des ballons dirigeables.

### Etat de la technique antérieure

Le document US 2010 / 010 216 4 décrit un système de transport d'hydrogène. Il est envisagé que un drone ou projectile serait tiré depuis l'aérostat.

L'arrimage des grands aérostats dirigeables à des mâts de stationnement a toujours été une manœuvre délicate qui nécessitait l'intervention d'un grand nombre de personnes au sol, parfois supérieur à plus d'une centaine, et qui s'avérait longue et présentant des risques à la fois pour les équipages de ces aérostats et pour les personnes au sol.

Par ailleurs, le pilotage de ces dirigeables en approche de structures réceptrices au sol est général complexe du fait de conditions aérodynamiques parfois défavorables à l'approche du sol et de la forte inertie intrinsèque de ces aéronefs.

Le but de la présente invention est de remédier à ces inconvénients en proposant un système d'arrimage qui puisse faciliter l'approche d'un aérostat vers une structure réceptrice et permette son arrimage plus aisément et plus sûrement que dans les conditions actuelles.

### Exposé de l'invention

Cet objectif est atteint avec un système selon la revendication 1.

Le système d'arrimage selon l'invention peut en outre avantageusement comprendre des moyens pour enrouler le câble reliant l'aérostat à la structure réceptrice, de façon à rapprocher l'aérostat de la structure réceptrice.

Dans une version particulière d'un système d'arrimage selon l'invention, les moyens d'enroulement comprennent un dispositif d'enroulement logé au niveau de la structure réceptrice.

Le dispositif d'enroulement peut avantageusement comprendre un treuil motorisé ayant un axe de rotation sensiblement vertical, disposé en haut de la structure réceptrice. Ce treuil motorisé comporte par exemple un tambour pourvu d'une fente prévue pour recevoir l'extrémité du câble d'arrimage.

Le système d'arrimage selon l'invention est de préférence agencé pour libérer le drone aérien après fixation de la première extrémité du câble à la structure réceptrice ou à l'aérostat.

Dans une version particulière de l'invention, le câble d'arrimage comprend une pluralité de tronçons consécutifs de diamètres successivement croissants, un premier de ces tronçons présentant le diamètre le plus petit et étant terminé par la première extrémité prévue pour être emportée par le drone aérien.

Dans une autre version de l'invention, le dispositif d'enroulement logé dans la structure réceptrice est couplé à un système de connexion mécanique comprenant un premier connecteur mécanique disposé au nez de l'aérostat et un second connecteur mécanique disposé en haut de la structure réceptrice, ces premier et second connecteurs mécaniques étant prévus pour être mécaniquement couplés à l'issue d'une séquence d'enroulement du câble d'arrimage.

Suivant un autre aspect de l'invention, il est proposé un procédé selon la revendication 12.

Le procédé d'arrimage selon l'invention peut en outre comprendre une étape d'enroulement du câble d'arrimage après fixation de sa première extrémité à la structure réceptrice ou à l'aérostat, jusqu'à ce qu'une partie de l'aérostat rejoigne sensiblement une partie de la structure réceptrice.

Lorsque le procédé selon l'invention est mis en œuvre dans un système d'arrimage selon l'invention associé à un système de couplage mécanique, l'étape d'enroulement du câble d'arrimage est effectuée jusqu'à atteindre un couplage des premier et second connecteurs mécaniques équipant respectivement l'aérostat et la structure réceptrice.

Le procédé d'arrimage selon l'invention peut avantageusement comprendre une étape pour libérer le drone aérien tout en maintenant la fixation de la première extrémité du câble à la structure réceptrice.

Les étapes successives du procédé d'arrimage selon l'invention peuvent être au moins en partie contrôlées depuis l'aérostat et/ou depuis le sol.

Le drone aérien peut être programmé pour rejoindre en mode autonome l'aérostat depuis la structure réceptrice.

Suivant encore un autre aspect de l'invention, il est proposé un aérostat équipé d'un système d'arrimage selon l'invention, ainsi qu'une structure réceptrice adaptée pour recevoir ce système d'arrimage.

### Description des figures et modes de réalisation

D'autres avantages et particularités de l'invention apparaîtront à la lecture de la description détaillée de mises en œuvre et de modes de réalisation nullement limitatifs, et des dessins annexés suivants :
- la figure 1 illustre de façon schématique un premier exemple de mise en œuvre d'un système d arrimage, l'example n'est pas couvert par les revendications.
- la figure 2 est une vue de dessus du système d'arrimage illustré par la figure 1, à un stade où le drone aérien s'éloigne après avoir assuré la connexion du câble à la structure réceptrice;
- la figure 3 illustre de façon schématique une configuration particulière d'un système d'arrimage partie intégrante d'un système de couplage mécanique d'un aérostat à une structure réceptrice , la configuration n'est pas couverte par les revendications;
- la figure 4 illustre une autre version d'un système d'arrimage, dans lequel la structure réceptrice est simplement pourvue d'un dispositif d'accroche, le système n'est pas couvert par les revendications;
- la figure 5 illustre l'approche d'un drone aérien portant un câble d'arrimage vers une structure réceptrice du système d'arrimage illustré par la figure 4 ;
- la figure 6 illustre de façon schématique la liaison d'un câble d'arrimage à la structure réceptrice et l'éloignement du drone aérien, dans la configuration du système d'arrimage illustré par la figure 4 ;
- la figure 7 est une vue de dessus illustrant la connexion mécanique du nez d'un aérostat à une structure réceptrice, dans la configuration du système d'arrimage illustré par la figure 4;
- la figure 8 illustre de façon schématique un système d'arrimage mettant en œuvre une pluralité de drones aériens**,** le système n'est pas couvert par les revendications;
- la figure 9 illustre de façon schématique une autre forme de réalisation d'un système d'arrimage selon l'invention, dans lequel le drone aérien est logé au sein de la structure réceptrice et le nez de l'aérostat est pourvu d'un dispositif d'accroché;
- la figure 10 illustre une étape de fixation du câble d'arrimage à l'aérostat et le départ du drone aérien, dans la configuration de système d'arrimage représentée en figure 9; et
- la figure 11 illustre la connexion mécanique de l'aérostat à la structure réceptrice, réalisée au moyen d'un système d'arrimage tel que représenté aux figures 9 et 10.

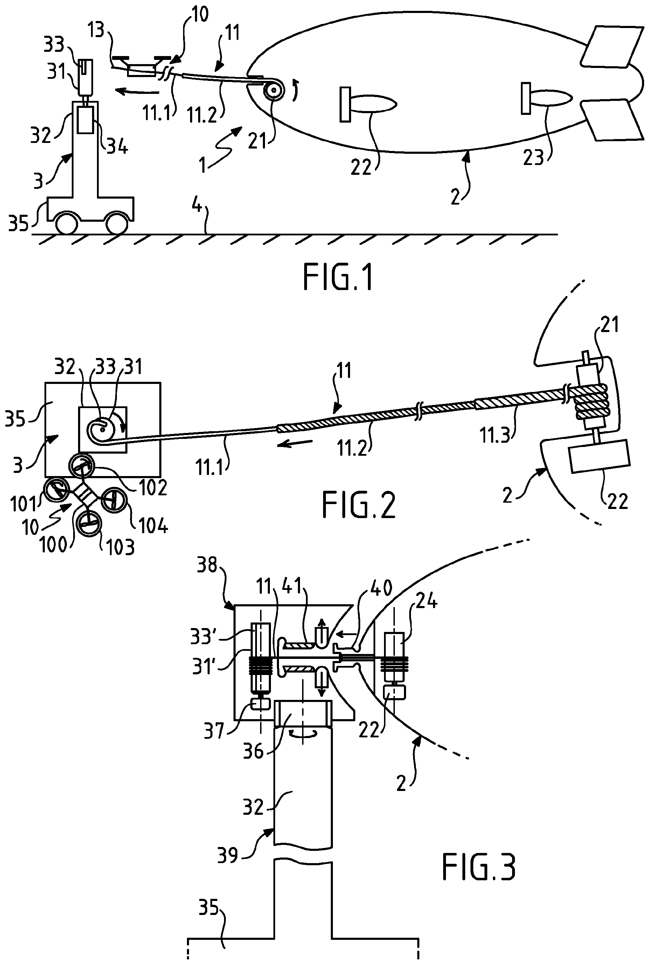

On va d'abord décrire, en référence aux figures 1 et 2, un premier exemple de réalisation d'un système d'arrimage 1, en même temps que le procédé mis en œuvre dans ce système , le système ne tombe pas dans l'objet de l'invention.

Le système d'arrimage 1 comprend un drone aérien 10 contrôlé pour emporter un câble d'arrimage 11 se déroulant depuis un tambour 21 disposé à l'avant d'un aérostat 2 équipé de groupes propulseurs 22, 23, vers une structure réceptrice 3.

Cette structure réceptrice 3 comprend une base 35, éventuellement automotrice, en appui sur un sol ou une piste 4, et un pylône 32 au sommet duquel est disposé un treuil comportant un tambour d'enroulement 31 dont l'axe vertical est entrainé par un moteur 34. Le tambour 31 est pourvu d'une fente 33 agencée pour recevoir l'extrémité 13 du câble d'arrimage.

Le drone aérien 10 est par exemple du type quadrimoteurs avec quatre hélices 101, 102, 103, 104 et comporte un dispositif central 100 de verrouillage/déverrouillage d'un câble d'arrimage.

Lorsque l'aérostat 2 se trouve à l'approche de la structure réceptrice 3, le pilote déclenche une procédure d'arrimage avec le décollage du drone aérien 10 depuis l'aérostat en emportant l'extrémité 13 du câble d'arrimage 11 verrouillé dans le dispositif central 100 du drone 10. Le tambour d'enroulement 21 est contrôlé en mode roue libre afin de libérer le câble en déroulement et permettre au drone 10 de tirer ce câble en limitant les efforts de traction. Le drone 10 suit une trajectoire optimisée en direction du tambour 31 au sommet de la structure réceptrice 3 et est contrôlé de façon à insérer l'extrémité 13 dans la fente réceptrice 33 du tambour 31. Lorsque cette insertion est effectuée, le drone 10 libère alors le câble d'arrimage 11.

Le tambour 31 est ensuite entrainé par le moteur 34 pour enrouler le câble 11 dont la seconde extrémité est désormais maintenue fixe par rapport à l'aérostat 2, soit par immobilisation du tambour 21 logé dans l'aérostat 2, soit parce que le câble 2 est entièrement déroulé de ce tambour 21. Comme l'illustre la figure 2, le drone 10 peut alors quitter la zone d'arrimage et rejoindre par exemple un site de recharge ou bien l'aérostat 2.

Le tambour d'enroulement 31 situé sur la structure réceptrice 3 est entraîné jusqu'à ce que le nez de l'aérostat 2 se trouve à proximité immédiate de la zone réceptrice 3. En référence à la figure 2, le câble d'arrimage 11 peut comporter plusieurs tronçons de diamètres distincts, par exemple un premier tronçon 11.1 d'un premier diamètre, un second tronçon 11.2 d'un second diamètre supérieur au premier puis un troisième tronçon 11.3 d'un troisième diamètre supérieur au second. Le premier tronçon 11.1 de diamètre inférieur est celui dont l'extrémité 13 est emportée par le drone 10. Ceci a pour effet de limiter la charge pondérale imposée au drone 10 dans la première partie de sa trajectoire vers la structure réceptrice 3. On peut ainsi concevoir un câble en répartissant les longueurs respectives des tronçons de câble de façon à permettre que la masse de câble supportée par le drone soit minimisée.

Le système d'arrimage peut aussi être associé à un système de couplage mécanique de l'aérostat à la structure réceptrice, comme l'illustre la figure 3. Ainsi, on peut concevoir une structure réceptrice 39 immobilisée sur le sol 4 et comportant sur la partie supérieure de son mât 32 un équipage 38 mobile en rotation au moyen d'un mécanisme de roulement 36. Cet équipage mobile 38 inclut un connecteur mécanique femelle 41 agencé pour recevoir un connecteur mécanique mâle 40 solidaire du nez de l'aérostat 2, ainsi qu'un dispositif d'enroulement 31' entraîné par un moteur 37.

Lorsque le drone 10, tel que décrit en référence aux figures 1 et 2, a réussi à insérer l'extrémité 13 du câble d'arrimage 11 dans la fente 33' du tambour 31' puis a libéré le câble 11 et s'est éloigné de la structure réceptrice, le tambour 31' est alors entraîné de façon à enrouler le câble 11 et donc à tirer l'aérostat 2 jusqu'à ce qu'il se rapproche de l'équipage mobile 38 et que le connecteur mécanique mâle 40 pénètre dans le connecteur mécanique femelle 41, assurant ainsi un couplage mécanique de l'aérostat 2 à la structure réceptrice 39.

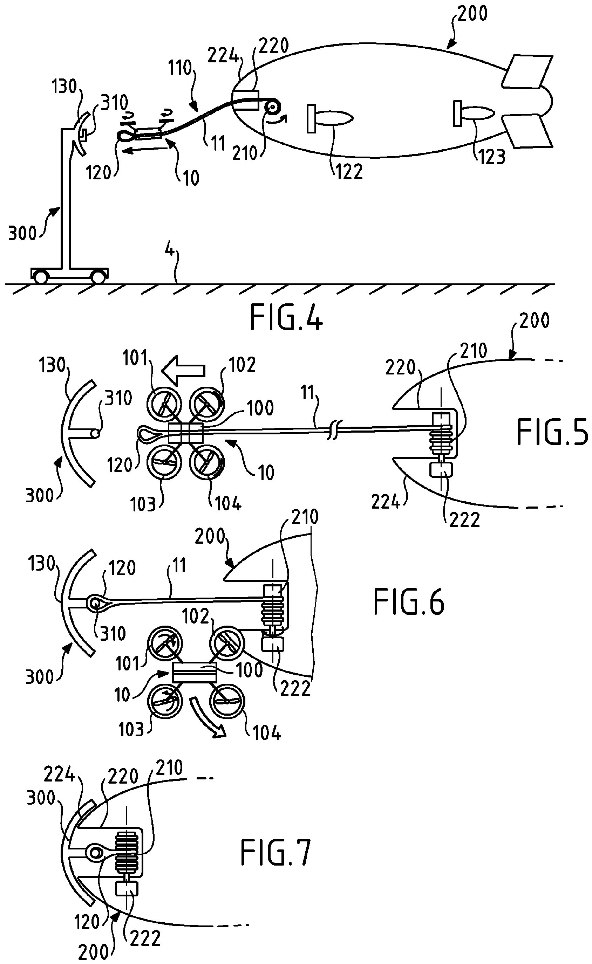

On va maintenant décrire, en référence aux figures 4 à 7, un autre mode de réalisation d'un système d'arrimage 110, en même temps que le procédé d'arrimage mis en œuvre dans ce système. Le système ne tombe pas dans l'objet de l'invention.

Le système d'arrimage 110 est prévu pour réaliser un arrimage d'un aérostat 200 à une structure réceptrice 300 telle qu'un mât d'arrimage, en référence à la figure 1. Cette structure réceptrice 300 comporte une partie incurvée 130 pourvue d'un dispositif d'accroche 310, par exemple une pièce en forme de crochet, prévu pour recevoir une extrémité en boucle 120 d'un câble d'arrimage 11, et elle est généralement déplaçable sur un plan 4. Elle peut par exemple être disposée sur la plateforme d'un camion ou disposer d'un groupe moteur.

Le système d'arrimage 110 comprend un drone aérien 10, par exemple de type quadri-rotors, emportant une extrémité libre formant une boucle 120 du câble d'arrimage 11 dont l'autre extrémité est enroulée sur un tambour de treuil 210 embarqué dans l'aérostat 200 et entrainé par un moteur 222. Le drone 10 est prévu pour être logé au sein de l'aérostat 200 dans un logement 220 qui peut être fermé par un dispositif de trappe ou équivalent (non représenté).

Lorsque l'aérostat 200 se trouve à l'approche de la structure réceptrice 300 par le contrôle de propulseurs vectorisés 122, 123 - dont deux seulement sont représentés en figure 4 - qui sont disposés de part et d'autre du corps principal de l'aérostat 200, le poste de pilotage de cet aérostat commande le vol du drone aérien 10 qui sort alors de son logement 220 et emporte la première extrémité 120 du câble d'arrimage 11. La trajectoire de ce drone aérien 10 est contrôlée vers la cible constituée par le dispositif d'accroche 310 agencé sur la partie supérieure de la structure réceptrice 300. On peut aussi prévoir que le drone aérien 10 fonctionne en mode autonome pour effectuer la trajectoire entre l'aérostat 200 et le dispositif d'accroche 310 de la structure réceptrice 300.

Le drone aérien 10 représenté sur les figures 5 et 6 comporte quatre rotors 101-104 et un dispositif 100 de verrouillage contrôlé de l'extrémité 120 du câble d'arrimage 11. Lorsque le drone aérien 10 est contrôlé dans sa trajectoire d'approche, le treuil 210 est placé en position de roue libre afin que le câble puisse se dérouler sans résistance de façon à ne pas freiner le déplacement du drone 10.

Lorsque le drone 10 a atteint sa cible, il est alors commandé pour insérer la boucle faisant fonction d'extrémité 120 dans le dispositif d'accroche 310. L'opération d'insertion étant réalisée, le drone aérien 10 est alors commandé pour déverrouiller le dispositif 100 et ainsi libérer le câble d'arrimage 11. Le drone aérien 10 peut alors quitter la zone d'arrimage, comme l'illustre la figure 6, et rejoindre soit le logement dédié 220 pour y rechargé électriquement, soit une zone d'accueil au sol dédiée à ce drone. Le moteur 222 d'entraînement du tambour de treuil 210 est alors commandé pour enrouler le câble 11 de façon à rapprocher l'aérostat 200 de la structure réceptrice 300 jusqu'à ce que le nez 224 de l'aérostat 200 soit sensiblement en contact avec la partie incurvée 130 de la structure réceptrice 300, comme l'illustre la figure 7.

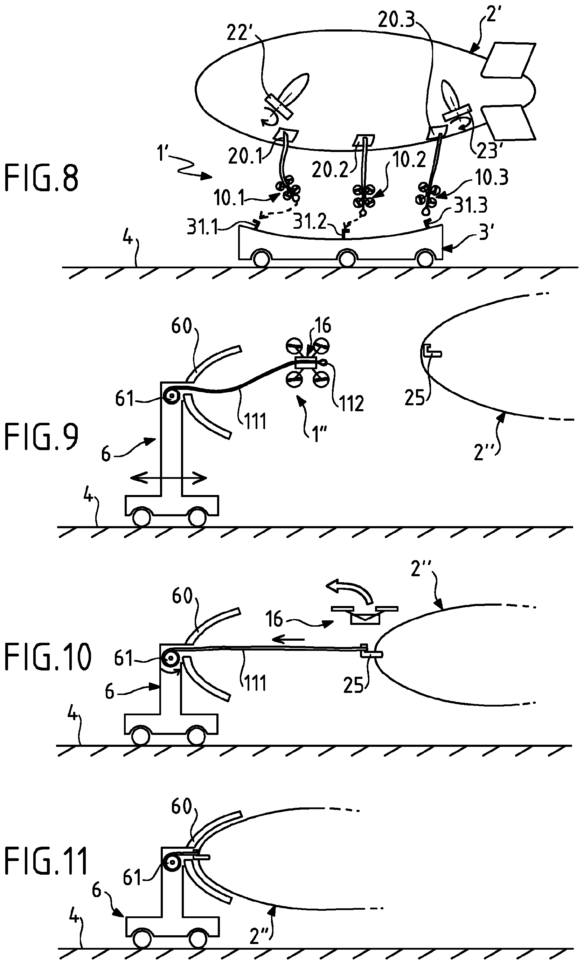

En référence à la figure 8, la structure réceptrice 3', prévue pour recevoir un aérostat 2', peut avoir une configuration du type berceau sur un châssis motorisé pouvant se déplacer et être immobilisé sur un sol 4. L'aérostat 2', pourvu de propulseurs vectorisés 22', 23', est équipé d'un système d'arrimage 1' comprenant plusieurs drones aériens 10.1, 10.2, 10.3 prévus pour être disposés dans des logements 20.1, 20.2, 20.3 et pour rejoindre des dispositifs d'accroche 31.1, 31.2, 31.3 positionnés sur une partie supérieure de la structure réceptrice 3'.

On peut aussi prévoir, en référence aux figures 9 à 11, une configuration dans laquelle le système d'arrimage 1" selon l'invention comporte au moins un drone aérien 16 rattaché à une structure réceptrice motorisée 6 disposée sur un sol ou une piste 4 et agencé pour emporter un câble d'arrimage 111 vers un aérostat 2" à l'approche de la structure réceptrice 6 pourvue d'un dispositif incurvé 60 prévu pour recevoir le nez de l'aérostat 2". Cette structure réceptrice peut être pourvue d'un logement (non représenté) pour accueillir le drone aérien 16 et d'un treuil motorisé 61 commandant le déroulement ou l'enroulement du câble d'arrimage 110.

Lorsque le drone aérien 16 a atteint le nez de l'aérostat 2" qui est pourvu d'un dispositif d'accroche 25 représenté schématiquement en figure 9 et alors que le treuil motorisé 61 est commandé pour laisser le câble 111 se dérouler, il est alors contrôlé pour insérer la boucle d'extrémité 112 du câble d'arrimage 111 dans le dispositif d'accroche 25, puis pour déverrouiller le câble 111 et quitter la zone d'arrimage, comme l'illustre la figure 10. Le drone aérien 16 peut alors retourner sur sa base au sein ou au niveau de la structure réceptrice 6 ou bien être commandé pour rejoindre une zone d'accueil dédiée pour y être rechargé électriquement.

Après fixation du câble d'arrimage 111 au dispositif d'accroche 25 de l'aérostat 2", le treuil motorisé 61 est alors commandé pour enrouler le câble 111 et de cette façon rapprocher l'aérostat 2" de la structure réceptrice 6 qui est maintenue immobilisée par rapport au sol 4 ou éventuellement être commandée en mouvement pour faciliter le couplage de l'aérostat 2" à la structure réceptrice. La commande d'enroulement du câble 111 est arrêtée lorsque le nez de l'aérostat 2" entre sensiblement en contact avec le dispositif incurvé récepteur 60, comme l'illustre la figure 11.

## Revendications

1. Système (1") pour arrimer un aérostat (2") à une structure réceptrice (6), comprenant une structure réceptrice (6), un câble d'arrimage (111) et
au moins un drone aérien (16), **caractérisé en ce que** le drone aérien est contrôlable pour se déplacer entre ledit aérostat ( 2") et ladite structure réceptrice (6) en emportant une première extrémité (112) du câble d'arrimage (111) dont la seconde extrémité est fixée à ladite structure réceptrice (6) et pour fixer ladite première extrémité (112) audit aérostat (2"), de sorte que ce câble (111) relie ledit aérostat (2") à ladite structure réceptrice (6) ;
le drone aérien (16) étant agencé pour partir de la structure réceptrice (6), ce drone aérien (16) étant contrôlable pour (i) emporter vers l'aérostat (2") la première extrémité (112) du câble d'arrimage dont la seconde extrémité est fixée à ladite structure réceptrice (6) et (ii) fixer ladite première extrémité (112) audit aérostat (2").

2. Système d'arrimage ( 1") selon la revendication 1, **caractérisé en ce que** la structure réceptrice est motorisée (6) et disposée sur un sol ou une piste (4) et comporte l'au moins un drone aérien (16) rattaché à la structure réceptrice et agencé pour emporter le câble d'arrimage (111) vers l'aérostat (2") à l'approche de la structure réceptrice (6).

3. Système d'arrimage ( 1") selon la revendication 1 ou 2, **caractérisé en ce que** la structure réceptrice est pourvue d'un dispositif incurvé (60) prévu pour recevoir le nez de l'aérostat (2").

4. Système d'arrimage selon l'une quelconque des revendications précédentes, **caractérisé en ce que** la structure réceptrice est pourvue d'un logement pour accueillir le drone aérien (16).

5. Système d'arrimage (1") selon l'une quelconque des revendications précédentes, **caractérisé en ce qu'**il comprend en outre des moyens (61) pour enrouler ledit câble (111) reliant l'aérostat (2") à la structure réceptrice (6), de façon à rapprocher ledit aérostat (2") de ladite structure réceptrice (6).

6. Système d'arrimage ( 1") selon la revendication 5, **caractérisé en ce que** les moyens d'enroulement comprennent un dispositif d'enroulement (61) logé au niveau de la structure réceptrice (6).

7. Système d'arrimage
▪ ) selon la revendication 6, **caractérisé en ce que** le dispositif d'enroulement comprend un treuil motorisé ayant un axe de rotation sensiblement vertical, disposé en haut de la structure réceptrice.

8. Système d'arrimage 1" ▪ ) selon la revendication 7, **caractérisé en ce que** le treuil motorisé comporte un tambour pourvu d'une fente prévue pour recevoir l'extrémité du câble d'arrimage.

9. Système d'arrimage (1") selon l'une quelconque des revendications 6 à 8, **caractérisé en ce que** le dispositif d'enroulement logé dans la structure réceptrice est couplé à un système de connexion mécanique comprenant un premier connecteur mécanique disposé au nez de l'aérostat et un second connecteur mécanique disposé en haut de la structure réceptrice), lesdits premier et second connecteurs mécaniques étant prévus pour être mécaniquement couplés à l'issue d'une séquence d'enroulement du câble d'arrimage.

10. Système d'arrimage ( 1") selon l'une quelconque des revendications précédentes, **caractérisé en ce qu'**il est agencé pour libérer le drone aérien (16) après fixation de la première extrémité du câble (111) à l'aérostat (2").

11. Système d'arrimage 1" ▪ ) selon l'une quelconque des revendications précédentes, **caractérisé en ce que** le câble d'arrimage comprend une pluralité de tronçons consécutifs de diamètres successivement croissants, un premier desdits tronçons présentant le diamètre le plus petit et étant terminé par la première extrémité prévue pour être emportée par le drone aérien.

12. Procédé pour arrimer un aérostat (2") à une structure réceptrice (6), mis en œuvre dans un système d'arrimage ( 1") selon l'une quelconque des revendications précédentes, comprenant les étapes de :
- commande d'au moins un drone aérien (16) emportant une première extrémité (112) d'un câble d'arrimage dont la seconde extrémité est fixée à ladite structure réceptrice (6), selon une trajectoire le conduisant vers ledit aérostat (2"), et
- fixation de ladite première extrémité (112) dudit câble d'arrimage à une partie dudit aérostat (2").

13. Procédé d'arrimage selon la revendication 12, **caractérisé en ce qu'**il comprend en outre une étape d'enroulement du câble d'arrimage (111) après fixation de sa première extrémité (112) à l'aérostat ( 2 "), jusqu'à ce qu'une partie dudit aérostat (2") rejoigne sensiblement une partie de ladite structure réceptrice.

14. Procédé selon la revendication 13, mis en œuvre dans un système d'arrimage selon la revendication 9, **caractérisé en ce que** l'étape d'enroulement du câble d'arrimage est effectuée jusqu'à atteindre un couplage des premier et second connecteurs mécaniques.

15. Procédé d'arrimage selon l'une quelconque des revendications 12 à 14, **caractérisé en ce qu'**il comprend en outre une étape pour libérer le drone aérien (16) tout en maintenant la fixation de la première extrémité (112) du câble à la structure réceptrice (6).

16. Procédé d'arrimage selon l'une quelconque des revendications 12 à 15, **caractérisé en ce que** les étapes successives sont au moins en partie contrôlées depuis l'aérostat (2").

17. Procédé d'arrimage selon l'une quelconque des revendications 12 à 16, **caractérisé en ce que** les étapes successives sont au moins en partie contrôlées depuis le sol.

18. Procédé d'arrimage selon l'une quelconque des revendications 12 à 17, **caractérisé en ce que** le drone aérien (16) est programmé pour rejoindre en mode autonome l'aérostat (2") depuis la structure réceptrice (6).

19. Aérostat (2") équipé d'un système d'arrimage ( 1") selon l'une quelconque des revendications 1 à 11.

20. Structure (6) prévue pour recevoir un aérostat (2"), équipée d'un système d'arrimage selon l'une quelconque des revendications 1 à 11.

## Patentansprüche

1. System (1") zum Ankoppeln eines Aerostaten (2") an eine Empfangsstruktur (6), aufweisend eine Empfangsstruktur (6), ein Ankopplungsseil (111) und mindestens eine Flugdrohne (16), **dadurch gekennzeichnet, dass** die Flugdrohne steuerbar ist, um sich zwischen dem Aerostaten (2") und der Empfangsstruktur (6) zu bewegen, wobei sie ein erstes Ende (112) des Ankopplungsseils (111) mitnimmt, dessen zweites Ende an der Empfangsstruktur (6) befestigt ist, und um das erste Ende (112) an dem Aerostaten (2") zu befestigen, so dass dieses Seil (111) den Aerostaten (2") mit der Empfangsstruktur (6) verbindet;
wobei die Flugdrohne (16) dazu geeignet ist, von der Empfangsstruktur (6) zu starten, wobei die Flugdrohne (16) steuerbar ist, um (i) das erste Ende (112) des Ankopplungsseils, dessen zweites Ende an der Empfangsstruktur (6) befestigt ist, zu dem Aerostaten (2") mitzunehmen, und (ii) das erste Ende (112) an dem Aerostaten (2") zu befestigen.

2. Ankopplungssystem (1") nach Anspruch 1, **dadurch gekennzeichnet, dass** die Empfangsstruktur motorisiert (6) und auf einem Boden oder einer Piste (4) angeordnet ist und die mindestens eine Flugdrohne (16) aufweist, die an der Empfangsstruktur angebracht und dazu eingerichtet ist, das Ankopplungsseil (111) bei der Annäherung an die Empfangsstruktur (6) zum Aerostaten (2") mitzunehmen.

3. Ankopplungssystem (1") nach Anspruch 1 oder 2, **dadurch gekennzeichnet, dass** die Empfangsstruktur mit einer gewölbten Vorrichtung (60) versehen ist, die zur Aufnahme der Nase des Aerostaten (2") vorgesehen ist.

4. Ankopplungssystem nach einem der vorhergehenden Ansprüche, **dadurch gekennzeichnet, dass** die Empfangsstruktur mit einer Aufnahme zum Aufnehmen der Flugdrohne (16) versehen ist.

5. Ankopplungssystem (1") nach einem der vorhergehenden Ansprüche, **dadurch gekennzeichnet, dass** es ferner Mittel (61) zum Aufwickeln des Seils (111) aufweist, das den Aerostaten (2") mit der Empfangsstruktur (6) verbindet, um so den Aerostaten (2") näher an die Empfangsstruktur (6) zu bringen.

6. Ankopplungssystem (1") nach Anspruch 5, **dadurch gekennzeichnet, dass** die Aufwickelmittel eine Aufwickelvorrichtung (61) aufweisen, die im Bereich der Empfangsstruktur (6) untergebracht ist.

7. Ankopplungssystem (1") nach Anspruch 6, **dadurch gekennzeichnet, dass** die Aufwickelvorrichtung eine motorisierte Winde mit einer im Wesentlichen vertikalen Drehachse aufweist, die im oberen Bereich der Empfangsstruktur angeordnet ist.

8. Ankopplungssystem (1") nach Anspruch 7, **dadurch gekennzeichnet, dass** die motorisierte Winde eine Trommel aufweist, die mit einem Schlitz zur Aufnahme des Endes des Ankopplungsseils versehen ist.

9. Ankopplungssystem (1") nach einem der Ansprüche 6 bis 8, **dadurch gekennzeichnet, dass** die in der Empfangsstruktur untergebrachte Aufwickelvorrichtung mit einem mechanischen Verbindungssystem gekoppelt ist, das einen ersten mechanischen Verbinder, der an der Nase des Aerostaten angeordnet ist, und einen zweiten mechanischen Verbinder, der im oberen Bereich der Empfangsstruktur angeordnet ist, aufweist, wobei die ersten und zweiten mechanischen Verbinder dazu vorgesehen sind, beim Abschluss einer Sequenz des Aufwickelns des Ankopplungsseils mechanisch gekoppelt zu werden.

10. Ankopplungssystem (1") nach einem der vorhergehenden Ansprüche, **dadurch gekennzeichnet, dass** es dazu eingerichtet ist, die Flugdrohne (16) nach der Befestigung des ersten Endes des Seils (111) an dem Aerostaten (2") freizugeben.

11. Ankopplungssystem (1") nach einem der vorhergehenden Ansprüche, **dadurch gekennzeichnet, dass** das Ankopplungsseil eine Mehrzahl von aufeinanderfolgenden Abschnitten mit sukzessive zunehmenden Durchmessern aufweist, wobei ein erster der Abschnitte den kleinsten Durchmesser aufweist und mit dem ersten Ende endet, das dazu vorgesehen ist, von der Flugdrohne mitgenommen zu werden.

12. Verfahren zum Ankoppeln eines Aerostaten (2") an eine Empfangsstruktur (6), das in einem Ankopplungssystem (1") nach einem der vorhergehenden Ansprüche durchgeführt wird, umfassend die Schritte:
- Steuern mindestens einer Flugdrohne (16), die ein erstes Ende (112) eines Ankopplungsseils mitnimmt, dessen zweites Ende an der Empfangsstruktur (6) befestigt ist, auf einem Weg, der sie zu dem Aerostaten (2") führt, und
- Befestigen des ersten Endes (112) des Ankopplungsseils an einem Teil des Aerostaten (2").

13. Ankopplungsverfahren nach Anspruch 12, **dadurch gekennzeichnet, dass** es ferner einen Schritt des Aufwickelns des Ankopplungsseils (111) nach der Befestigung seines ersten Endes (112) am Aerostaten (2 ") umfasst, bis ein Teil des Aerostaten (2") im Wesentlichen mit einem Teil der Empfangsstruktur zusammentrifft.

14. Verfahren nach Anspruch 13, durchgeführt in einem Ankopplungssystem nach Anspruch 9, **dadurch gekennzeichnet, dass** der Schritt des Aufwickelns des Ankopplungsseils durchgeführt wird, bis eine Kopplung von ersten und zweiten mechanischen Verbindern erreicht ist.

15. Ankopplungsverfahren nach einem der Ansprüche 12 bis 14, **dadurch gekennzeichnet, dass** es ferner einen Schritt zum Freigeben der Flugdrohne (16) umfasst, während die Befestigung des ersten Endes (112) des Seils an der Empfangsstruktur (6) aufrechterhalten wird.

16. Ankopplungsverfahren nach einem der Ansprüche 12 bis 15, **dadurch gekennzeichnet, dass** die aufeinanderfolgenden Schritte zumindest teilweise von dem Aerostaten (2") aus gesteuert werden.

17. Ankopplungsverfahren nach einem der Ansprüche 12 bis 16, **dadurch gekennzeichnet, dass** die aufeinanderfolgenden Schritte zumindest teilweise vom Boden aus gesteuert werden.

18. Ankopplungsverfahren nach einem der Ansprüche 12 bis 17, **dadurch gekennzeichnet, dass** die Flugdrohne (16) so programmiert ist, dass sie in einem autonomen Modus von der Empfangsstruktur (6) aus zum Aerostaten (2") gelangt.

19. Aerostat (2"), ausgestattet mit einem Ankopplungssystem (1") nach einem der Ansprüche 1 bis 11.

20. Struktur (6), vorgesehen zum Empfangen eines Aerostaten (2"), ausgestattet mit einem Ankopplungssystem (1") nach einem der Ansprüche 1 bis 11.

## Claims

1. System (1") for docking an aerostat (2") on a receiving structure (6) comprising a receiving structure (6), a mooring cable (111) and at least one unmanned aerial vehicle (16), **characterized in that** the unmanned aerial vehicle can be controlled in order to move between said aerostat (2") and said receiving structure (6) while carrying a first end (112) of the mooring cable (111) the second end of which is fastened to said receiving structure (6) and in order to fasten said first end (112) to said aerostat (2"), so that this cable (111) connects said aerostat (2") to said receiving structure (6);
the unmanned aerial vehicle (16) being arranged to start from the receiving structure (6), and the unmanned aerial vehicle (16) being arranged for being controlled to:
(i) carry said first end (112) of said mooring cable to the aerostat (2"), when the second end is fastened to said receiving structure (6); and
(ii) fasten said first end (112) to said aerostat(2").

2. Docking system (1") according to claim 1, **characterized in that** the receiving structure is motorized (6) and placed on a ground or a track (4) and comprises the at least one unmanned aerial vehicle (16) attached to the receiving structure and arranged in order to carry the mooring cable (111) to the aerostat (2") on approach to the receiving structure (6).

3. Docking system (1") according to claim 1 or 2, **characterized in that** the receiving structure is provided with an incurved device (60) intended to receive the nose of the aerostat (2").

4. Docking system according to any one of the preceding claims, **characterized in that** the receiving structure is provided with a housing for receiving the unmanned aerial vehicle (16).

5. Docking system (1") according to any one of the preceding claims, **characterized in that** it also comprises means (61) for winding said cable (111) connecting the aerostat (2") to the receiving structure (6) so as to bring said aerostat (2") closer to said receiving structure (6).

6. Docking system (1") according to claim 5, **characterized in that** the winding means comprise a winding device (61) housed on the receiving structure (6).

7. Docking system (1") according to claim 6, **characterized in that** the winding device comprises a motorized winch having a substantially vertical axis of rotation, placed at the top of the receiving structure.

8. Docking system (1") according to claim 7, **characterized in that** the motorized winch comprises a drum provided with a slot intended to receive the end of the mooring cable.

9. Docking system (1") according to any one of the preceding claims 6 to 8, **characterized in that** said winding device housed on the receiving structure is coupled to a mechanical connection system comprising a first mechanical connector placed at the a nose of the aerostat and a second mechanical connector placed at the a top of the receiving structure, said first and second mechanical connectors being intended to be coupled mechanically at the an end of a winding sequence of the mooring cable.

10. Docking system (1") according to any one of the preceding claims, **characterized in that** it is arranged in order to release the unmanned aerial vehicle (16) after the first end of the cable (111) has been fastened to the aerostat (2").

11. Docking system (1") according to any one of the preceding claims, **characterized in that** the mooring cable comprises a plurality of consecutive sections with successively increasing diameters, a first of said sections having the smallest diameter and being terminated by the first end intended to be carried by the unmanned aerial vehicle.

12. Method for docking an aerostat (2") on a receiving structure (6), implemented in a docking system (1") according to any one of the preceding claims, comprising the steps of:
- controlling at least one unmanned aerial vehicle (16) carrying a first end (112) of a mooring cable the second end of which is fastened to said receiving structure (6), along a path leading it to said aerostat (2"), and
- fastening said first end (112) of said mooring cable to a part of said aerostat (2").

13. Docking method according to claim 12, **characterized in that** it also comprises a step of winding the mooring cable (111) after fastening the first end thereof (112) to the aerostat (2") until a part of said aerostat (2") substantially reaches a part of said receiving structure.

14. Method according to claim 13, implemented in a docking system according to claim 9, **characterized in that** the step of winding the mooring cable is carried out until coupling of the first and second mechanical connectors is achieved.

15. Docking method according to any one of claims 12 to 14, **characterized in that** it also comprises a step for releasing the unmanned aerial vehicle (16) while maintaining the fastening of the first end (112) of the cable to the receiving structure (6).

16. Docking method according to any one of claims 12 to 15, **characterized in that** the successive steps are at least partially controlled from the aerostat (2").

17. Docking method according to any one of claims 12 to 16, **characterized in that** the successive steps are at least partially controlled from the ground.

18. Docking method according to any one of claims 12 to 17, **characterized in that** the unmanned aerial vehicle (16) is programmed in order to reach autonomously the aerostat (2") from the receiving structure (6).

19. Aerostat (2") equipped with a docking system (1") according to any one of claims 1 to 11.

20. Structure (6) intended to receive an aerostat (2"), equipped with a docking system (1") according to any one of claims 1 to 11.
